# EUROPÄISCHE PATENTSCHRIFT

(11) **EP 4 052 959 B1**
(45) Veröffentlichungstag und Bekanntmachung des Hinweises auf die Patenterteilung: **25.09.2024**
(21) Anmeldenummer: 21160795.7
(22) Anmeldetag: 04.03.2021
(51) Int. Cl.: B60N 2/06

(54) **SITZLÄNGSVERSTELLEINHEIT, SITZANORDNUNG UND KRAFTFAHRZEUG**
SEAT LENGTH ADJUSTMENT UNIT, SEAT ASSEMBLY AND MOTOR VEHICLE
UNITÉ DE RÉGLAGE DE LA LONGUEUR DU SIÈGE, AGENCEMENT DE SIÈGE ET VÉHICULE AUTOMOBILE

(43) Veröffentlichungstag der Anmeldung: 07.09.2022
(73) Patentinhaber: IMS Gear SE & Co. KGaA, 78166 Donaueschingen (DE)
(72) Erfinder: Fuchs, Gabriel, 78479 Reichenau (DE); Hengstler, Manuel, 78112 St. Georgen (DE); Knöpfle, Michael, 78183 Hüfingen (DE)
(74) Vertreter: Westphal, Mussgnug & Partner Patentanwälte mbB

(56) Entgegenhaltungen:
- US-B1- 6 575 421
- US-B2- 7 389 967

## Beschreibung

Die vorliegende Erfindung betrifft eine Sitzlängsverstelleinheit für ein Kraftfahrzeug, eine Sitzanordnung mit einer solchen Sitzlängsverstelleinheit mit den Merkmalen des Patentanspruchs 16, sowie ein Kraftfahrzeug mit einer Sitzlängsverstelleinheit mit den Merkmalen des Patentanspruchs 19.

Sitzlängsverstelleinheiten sind aus dem Stand der Technik in unterschiedlichen Ausgestaltungen bekannt und dienen der Verstellung der Position eines Sitzes in einer Längsachse eines Fahrzeugs. Sitzlängsverstelleinheiten wirken typischerweise mit einer an einem Fahrzeugboden eines Chassis festgelegten Unterschiene und einer innerhalb dieser angeordneten Oberschiene zusammen, wobei die Oberschiene durch die Sitzlängsverstelleinheit motorisch verfahrbar ist. Das Verstellen der Oberschiene durch die Sitzlängsverstelleinheit erfolgt mittels einer Spindel, welche an einer Unterschiene, nachfolgend Schiene genannt angeordnet ist und an ihrem jeweiligen ersten Ende und zweiten Ende abgestützt ist. Die Schiene ist an dem Chassis befestigt.

Im Stand der Technik ist die Unterschiene auf der dem Fahrzeuginnenraum bzw. dem Passagierraum des Fahrzeugs zugewandten Seite des Fahrzeugbodens angeordnet, wobei die Unterschiene durch eine Tragstruktur beabstandet von dem Fahrzeugboden gehalten wird, damit einerseits der Sitz beabstandet zum Fahrzeugboden gehalten wird, damit eine sichere und ergonomische Sitzposition eingenommen werden kann.

Beispiele für Sitzlängsverstelleinheiten sind beispielsweise in DE 36 40 197 A1, DE 42 08 948 C2, DE 196 42 655 C2, DE 198 15 283 A1, DE 10 2004 013 009 A1, US 7 389 967 B2 und DE 10 2006 052 936 A1 beschrieben worden.

Derartige Längsverstelleinheiten haben sich im Stand der Technik bewährt, jedoch weisen diese den Nachteil auf, dass Komponenten von dem Fahrzeugboden in den Passagierraum ragen. Neuartige Innenraumkonzepte von Kraftfahrzeugen fordern jedoch zur vielseitigen Nutzung des Fahrzeuginnenraums einen ebenen Fahrzeugboden und größere Verfahrwege, damit in dem Fahrzeug eine variable und den individuellen Bedürfnissen angepasste Sitzanordnung möglich ist.

Hier setzt die vorliegende Erfindung an.

Die vorliegende Erfindung widmet sich der Aufgabe eine verbesserte Sitzlängsverstelleinheit vorzuschlagen, die in zweckmäßigerweise die aus dem Stand der Technik bekannten Nachteile beseitigt. Die Sitzlängsverstelleinheit soll es ermöglichen, einen Sitz in einer Längsrichtung eines Fahrzeugs elektrifiziert zu verstellen, wobei lange Verfahrwege sowie ein ebener Fahrzeugboden, der keine Gefahrenquellen und/oder Hindernisse darstellt, realisiert werden sollen. Darüber hinaus sollte bevorzugter Weise die Sitzlängsverstelleinheit eine hohe Crashfestigkeit aufweisen und bevorzugt für Gurtintegralsitze geeignet sein.

Diese Aufgaben werden durch die Sitzlängsverstelleinheit mit den Merkmalen des Patentanspruchs 1, eine Sitzanordnung mit den Merkmalen des Patentanspruchs 16 sowie dem Kraftfahrzeug mit den Merkmalen des Patentanspruchs 19 gelöst.

Weitere vorteilhafte Ausgestaltungen der vorliegenden Erfindung werden in den Unteransprüchen angegeben.

Die erfindungsgemäße Sitzlängsverstelleinheit mit den Merkmalen des Patentanspruchs 1 weist eine Antriebseinrichtung, zwei Schienen mit jeweils mindestens einer Spindel, die parallel zu einer Längsachse und zueinander beabstandet angeordnet sind, sowie zwei von der Antriebseinrichtung antreibbare Antriebsstränge auf. Darüber hinaus ist vorgesehen, dass jeder der Antriebsstränge jeweils eine erste Getriebeeinheit und eine zweite Getriebeeinheit aufweist, und die zweite Getriebeeinheit über die erste Getriebeeinheit mit der Antriebseinrichtung angetrieben wird. Weiterhin ist erfindungsgemäß vorgesehen, dass jeweils die zweite Getriebeeinheit des jeweiligen Antriebsstrangs zum Erzeugen eines Vortriebs in der Längsachse mit einer Spindel der jeweiligen Schiene gekoppelt ist bzw. in Eingriff steht.

Der vorliegenden Erfindung liegt die Idee zugrunde, zwei von einer gemeinsamen elektrischen Antriebseinrichtung angetriebene Antriebsstränge zu verwenden, um über zwei in einem Abstand zueinander und in Reihe geschaltete Getriebeeinheiten mit der Spindel zusammen zu wirken, um einen Vortrieb in der Längsachse zu erzeugen.

Die Sitzlängsverstelleinheit soll bevorzugt für zwei unterschiedliche Antriebskonzepte verwendet werden können, nämlich mit einer feststehenden Spindel und andererseits mit einer drehenden Spindel. Bei einer feststehenden Spindel wird eine Spindelmutter durch die zweite Getriebeeinheit auf der Spindel zur Erzeugung eines Vortriebs gedreht und folgt der Zwangsführung durch die Spindel. Bei einer drehenden Spindel treibt die zweite Getriebeeinheit die Spindel rotatorisch an und eine drehfeste Spindelmutter wandelt die Rotation der Spindel in eine laterale Bewegung entlang der Längsachse um.

Unter dem Antriebsstrang gemäß der vorliegenden Erfindung werden die Komponenten der Sitzlängsverstelleinheit verstanden, die die Leistung der Antriebseinrichtung auf die Spindel zur Erzeugung eines Vortriebs in der Längsachse aufbringen bzw. übertragen.

Die erste Getriebeeinheit und die zweite Getriebeeinheit von mindestens einem der zwei Antriebsstränge sind dabei derart beabstandet zueinander angeordnet, dass die erste Getriebeeinheit und die zweite Getriebeeinheit auf gegenüberliegenden Seiten in Richtung der Längsachse mindestens eines Sitzes angeordnet sein können und der jeweilige Antriebsstrang den Fahrzeugboden durchgreift.

Eine vorteilhafte Weiterbildung der vorliegenden Erfindung sieht vor, dass die erste Getriebeeinheit und/oder die zweite Getriebeeinheit von mindestens einem der zwei Antriebsstränge ein Schneckengetriebe umfassen bzw. umfasst. Schneckengetriebe weisen eine hohe Übersetzung auf. Daher kann bei der geforderten Leistung der Antriebseinrichtung die Leistung, insbesondere durch eine hohe Drehzahl, zu der zweiten Getriebeeinheit geführt werden. Die Dimensionierung des Antriebsstrangs ermöglicht eine kompakte Ausgestaltung und eine platzsparende Anordnung in dem begrenzt zur Verfügung stehenden Bauraum.

Weiterhin ist es vorteilhaft, wenn das jeweilige Schneckengetriebe eine Selbsthemmung aufweist, wodurch eine ungewünschte Verschiebung des Sitzes gehemmt werden kann, beispielsweise Weise durch Vibrationen.

Es hat sich nach Maßgabe einer bevorzugten Weiterbildung als vorteilhaft erwiesen, wenn die erste Getriebeeinheit und die zweite Getriebeeinheit von mindestens einem der zwei Antriebsstränge das gleiche Übersetzungsverhältnis und die gleiche Verzahnung aufweisen. Durch die im Wesentlichen baugleiche Ausgestaltung der ersten Getriebeeinheit und der zweiten Getriebeeinheit können möglichst viele Gleichteile verwendet werden, wodurch die Herstellungskosten reduziert werden können.

Die erste Getriebeeinheit kann gemäß einer Weiterbildung mit der Antriebseinrichtung über eine erste Welle und/oder die zweite Getriebeeinheit mit der ersten Getriebeeinheit über eine zweite Welle verbunden sein. Durch die Wellen sind bzw. ist eine beabstandete Anordnung der ersten Getriebeeinheit und der zweiten Getriebeeinheit und/oder der ersten Getriebeeinheit und der Antriebseinrichtung möglich, wobei der jeweilige Abstand beliebig konfiguriert werden kann, um die Sitzlängsverstelleinheit an die Gegebenheiten anzupassen.

Es ist Erfindungsgemäß, wenn die erste Welle zu der zweiten Welle in einem Winkel und versetzt angeordnet ist, und/oder wenn die erste Welle und die zweite Welle quer zu der Längsachse angeordnet sind. Der Winkel zwischen der ersten Welle und der zweiten Welle ermöglicht es, die Durchbrechung in dem Innenraumboden vorzugsweise senkrecht zu einer Ebene des Innenraumbodens zu durchdringen, währenddessen die ersten Wellen der Antriebsstränge zueinander gerichtet, bevorzugt parallel zu dem Innenraumboden bei der gemeinsamen Antriebseinrichtung, zusammenlaufen.

Gemäß einer bevorzugten Ausgestaltung beträgt der Winkel zwischen der ersten Welle und der zweiten Welle 90° ± 15°, weiter bevorzugt 90 ± 10°, noch weiter bevorzugt 90°± 5°, und am meisten bevorzugt näherungsweise 90°.

Nach Maßgabe einer weiteren vorteilhaften Ausgestaltung der vorliegenden Erfindung ist die erste Welle der zwei Antriebsstränge einstückig. Es sind somit die ersten Getriebeeinheiten der beiden Antriebsstränge durch eine gemeinsame erste Welle miteinander verbunden. Dies hat zum Vorteil, dass die beiden Antriebsstränge synchronisiert sind.

Weiterhin hat es sich als vorteilhaft erwiesen, wenn die Antriebseinrichtung zwischen den zwei Antriebssträngen angeordnet ist. Bevorzugt ist eine gemeinsame Antriebseinrichtung mittig zwischen den beiden Antriebssträngen angeordnet, wodurch eine symmetrische Leistungsverteilung erfolgen kann.

Vorteilhafter Weise sind bzw. ist die erste Welle und/oder die zweite Welle eine Flexwelle. Flexwellen zeichnen sich dadurch aus, dass diese einfach und variabel einen Abstand überbrücken können, wobei einerseits Toleranzen zwischen den Antriebssträngen und der gemeinsamen Antriebseinrichtung, als auch Toleranzen innerhalb des jeweiligen Antriebsstranges, insbesondere zwischen der ersten Getriebeeinheit und der zweiten Getriebeeinheit ausgeglichen werden können. Darüber hinaus dämpfen Flexwellen die Übertragung von Schwingungen.

Eine Weiterbildung der vorliegenden Erfindung sieht vor, dass die zweite Getriebeeinheit mindestens eines Antriebsstranges über eine Spindelmutter mit der Spindel gekoppelt ist. Die Spindelmutter greift in die mindestens eine Spindel der Schiene ein, wobei bevorzugt in Abhängigkeit von dem Antriebskonzept die Spindelmutter entweder drehbeweglich auf der Spindel angeordnet ist oder drehfest mit der Spindel verbunden werden kann. Die Spindelmutter kann vorzugsweise an der Schnecke des Schneckengetriebes der zweiten Getriebeeinheit ausgebildet sein.

Eine Weiterbildung der vorliegenden Erfindung sieht vor, dass die erste Getriebeeinheit und die zweite Getriebeeinheit mindestens eines Antriebsstrangs in einem Tragteil angeordnet sind. Das Tragteil kann beispielsweise ein Bügel sein, der den mindestens einen Sitz des Fahrzeuges trägt und auf der Schiene gelagert abgestützt gehalten ist. Bevorzugt weist das Tragteil einen Schlitten auf, der durch die Schiene geführt wird, wobei noch weiter bevorzugt der Schlitten in der Längsachse beweglich ist und im Übrigen durch einen Formschluss an der Schiene gehalten wird.

Darüber hinaus kann gemäß einer bevorzugten Ausgestaltung das Tragteil mindestens einen ersten Teilabschnitt und einen zweiten Teilabschnitt aufweisen, wobei in dem ersten Teilabschnitt die erste Getriebeeinheit und in dem zweiten Teilabschnitt die zweite Getriebeeinheit angeordnet ist. Der erste Teilabschnitt und der zweite Teilabschnitt können weiterhin über Verbindungsmittel lösbar koppelbar sein, wodurch es beispielsweise möglich ist, durch Lösen der Verbindungsmittel den Sitz von der Schiene zu lösen und aus dem Fahrzeug auszubauen.

Es kann gemäß einer Weiterbildung vorteilhaft sein, wenn die zweite Welle von mindestens einem der zwei Antriebsstränge einen ersten Wellenabschnitt und einen zweiten Wellenabschnitt aufweist, und wenn die Verbindungsmittel den ersten Wellenabschnitt und den zweiten Wellenabschnitt lösbar verbinden können. Beim Lösen der Verbindungsmittel werden somit nicht nur die beiden Teilabschnitte des Tragteils getrennt, sondern ebenso der jeweilige Antriebsstrang, wodurch eine besonders einfache Demontage zur Realisierung individueller Sitzkonzepte in dem Innenraum des Fahrzeugs möglich ist.

Eine Weiterbildung der vorliegenden Erfindung sieht vor, dass die jeweilige Schiene zwei Spindeln umfasst. Die zwei Spindeln der jeweiligen Schiene sind parallel und beabstandet zueinander angeordnet und sind jeweils mit einer der zweit Getriebeeinheiten des jeweiligen Antriebsstrangs zum Erzeugen eines Vortriebs in der Längsachse gekoppelt. Vorzugsweise sind die zwei Spindeln spiegelsymmetrisch zu der zweiten Getriebeeinheit angeordnet, wobei noch weiter bevorzugt die zwei Spindeln in einer Ebene liegen, die bevorzugt senkrecht zu der zweiten Welle und/oder bevorzugt parallel zu der ersten Welle und/oder parallel zu dem Innenraumboden angeordnet ist.

Bei einem Sitz mit einer oder mehreren Sitzflächen sowie integrierten Gurten besteht eine besondere Anforderung an die Crashfestigkeit. Die auftretenden Kräfte müssen von der Spindel vorwiegend aufgenommen werden, sodass der Spindeldurchmesser entsprechend angepasst werden muss. Die zwei Spindeln ermöglichen die Bauhöhe der Sitzlängsverstelleinheit durch die Verwendung kleinerer Spindeldurchmesser zu minimieren, wobei die Bauhöhe mit Blick auf die Elektrifizierung der Fahrzeuge ein wertvolles Gut ist. Benachbart zu dem Innenraumboden kann auf der von der Passagierraum abgewandten Seite ein Stromspeicher vorgesehen sein.

Vorzugsweise sind die zwei Spindeln gegenläufig, wodurch sich ein besonders einfacher und kompakter Aufbau der zweiten Getriebeeinheit ergibt.

Ein weiterer Aspekt der vorliegenden Erfindung betrifft eine Sitzanordnung, insbesondere eine Sitzanordnung für ein Kraftfahrzeug, aufweisend einen Innenraumboden mit einer Passagierraumseite und einer Unterseite, und einer zuvor beschriebenen Sitzlängsverstelleinheit, wobei der Innenraumboden in einer Längsachse mindestens zwei parallele und beabstandete Durchbrechungen aufweist, die die Passagierraumseite und die Unterseite verbinden, wobei auf der Unterseite die Schienen und die zweiten Getriebeeinheiten angeordnet sind, und wobei auf der Passagierraumseite die ersten Getriebeeinheiten und die Antriebseinrichtung angeordnet ist. Der Vortrieb der Sitzanordnung wird folglich auf der von der Passagierraumseite abgewandten Unterseite des Innenraumbodens erzeugt, wodurch die Schiene vom Passagierraum verdeckt angeordnet ist, und ein ebener Passagierraumboden realisiert werden kann, der eine beliebige Anordnung der Sitze in dem Kraftfahrzeug ermöglicht, ohne dass Komponenten von dem Innenraumboden in den Passagierraum ragen.

Weiterhin hat es sich als vorteilhaft erwiesen, wenn die Sitzanordnung einen Sitz mit mindesten einer Sitzfläche aufweist, der von dem Tragteil beabstandet zu der Schiene gehalten wird. Vorzugsweise ist der Sitz ein Gurtintegralsitz, der sich dadurch auszeichnet, dass bevorzugt für jede Sitzfläche ein Gurt an bzw. in dem Sitz integriert ist und sämtliche Kräfte des Gurtes über den Sitz in das Tragteil eingeleitet werden. Der Sitz kann eine Sitzreihe mit zwei oder vorzugsweise drei Sitzflächen sein.

Bevorzugt ragt das Tragteil durch die Durchbrechung hindurch und kann weiterhin - wie bereits zuvor beschrieben - mindestens einen ersten Teilabschnitt und einen zweiten Teilabschnitt aufweisen, wobei bevorzugt der erste Teilabschnitt von der Passagierraumseite in die jeweilige Durchbrechung ragt. Dadurch verbleibt nach der Demontage des mindestens einen Sitzes der zweite Teilabschnitt zurückspringend in der Durchbrechung, wodurch keine Komponente der Sitzlängsverstelleinheit in den Passagierraum ragt.

Nachfolgend werden unter Bezugnahme auf die begleitende Zeichnung ein Ausführungsbeispiel und eine Weiterbildung einer erfindungsgemäßen Sitzlängsverstelleinheit im Detail beschrieben. Es zeigen:
- Figur 1: eine schematische Frontansicht des Höhenaufbaus auf eine Sitzanordnung mit einer Sitzlängsverstelleinheit mit einer Antriebseinrichtung und zwei Antriebssträngen zum Verstellen eines Sitzes entlang einer Längsachse,
- Figur 2: eine vergrößerte Darstellung eines Antriebsstranges gemäß Figur 1, und
- Figur 3: eine Weiterbildung der Sitzlängsverstelleinheit gemäß Figur 1, wobei die Schiene zwei parallele und beabstandete Spindeln aufweist.

Nachfolgend werden gleiche oder funktional gleiche Bauteile der zwei Ausführungsbeispiele mit gleichen Bezugszeichen gekennzeichnet. Der Übersichtlichkeit halber sind in den einzelnen Figuren nicht alle gleichen oder funktional gleichen Teile mit einer Bezugsziffer versehen.

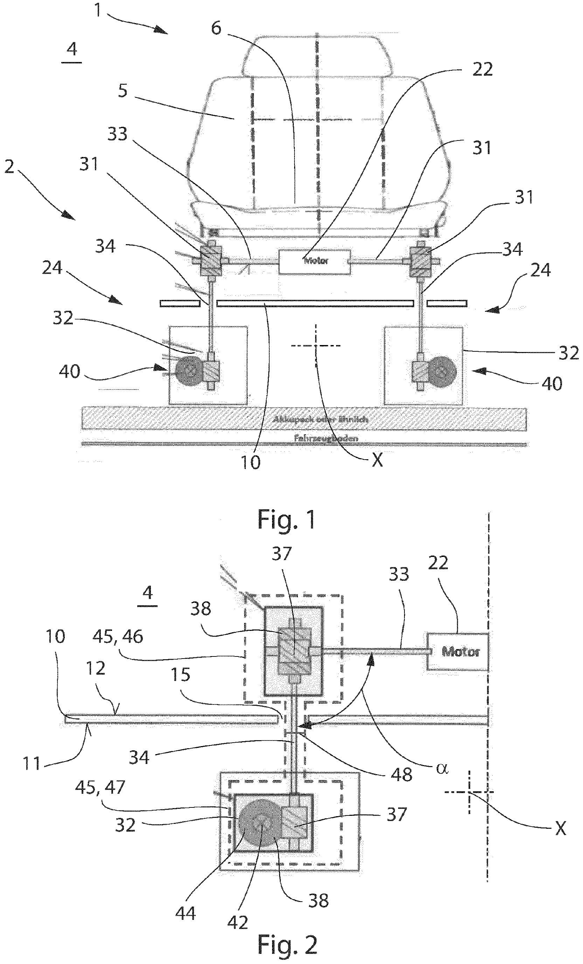

Figur 1 zeigt eine Frontansicht des Höhenaufbaus auf eine Sitzanordnung 1 mit einem Sitz 5 mit einer Sitzfläche 6 eines nur ausschnittweise dargestellten Innenraums 4 eines Kraftfahrzeugs mit einer Sitzlängsverstelleinheit 2.

Die Sitzanordnung 1 umfasst einen Innenraumboden 10 und die Sitzlängsverstelleinheit 2.

Der Innenraumboden 10 weist, wie in Figur 2 gezeigt ist, eine Passagierraumseite 12 und eine Unterseite 11 auf, wobei die Passagierraumseite 12 dem Passagierraum 4 und dem Sitz 5 zugewandt ist und die Unterseite 11 auf der von dem Passagierraum 4 und dem Sitz 5 abgewandten Seite angeordnet ist.

Der Innenraumboden 10 weist für jeden Antriebstrang 24 eine Durchbrechungen 15 auf, wobei in Figur 2 eine Durchbrechung 15 eines Antriebstrangs 24 dargestellt ist. Die zwei Durchbrechungen 15 sind in einer Längsachse X parallel und beabstandet zueinander angeordnet. Die Längsachse X wird bevorzugt durch die Fahrzeuglängsachse vorgegeben.

Die Sitzanordnung 1 kann einen Sitz 5 mit einer Sitzfläche 6 aufweisen, wobei angemerkt wird, dass der Sitz 5 der Sitzanordnung 1 ebenfalls mehrere Sitzflächen 6 umfassen kann, die eine Sitzreihe bilden.

Weiterhin ist aus der Figur 1 ersichtlich, dass die Sitzlängsverstelleinheit 2 eine elektrische Antriebseinrichtung 22, zwei Antriebsstränge 24 und zwei Schienen 40 umfasst, wobei der jeweilige Antriebsstrang 24 jeweils eine erste Getriebeeinheit 31 und eine zweite Getriebeeinheit 32 aufweist. Die zweite Getriebeeinheit 32 jedes Antriebsstranges 24 ist trieblich über die erste Getriebeeinheit 31 jedes Antriebsstranges 24 mit der gemeinsamen Antriebseinrichtung 22 verbunden, wodurch eine Antriebsleistung der Antriebseinrichtung 22 auf die Antriebsstränge 24 gleichmäßig aufgeteilt wird und über die erste Getriebeeinheit 31 zur zweiten Getriebeeinheit 32 übertragen wird.

Die erste Getriebeeinheit 31 ist mit der Antriebseinrichtung 22 mittels einer ersten Welle 33 verbunden und die zweite Getriebeeinheit 32 mit der ersten Getriebeeinheit 31 über eine zweite Welle 34.

Die erste Welle 33 und/oder die zweite Welle 34 ermöglichen die beabstandete Anordnung der Antriebseinrichtung 22 zu der ersten Getriebeeinheit 31 bzw. der ersten Getriebeeinheit 31 zu der zweiten Getriebeeinheit 32, wobei weiter bevorzugt die erste Welle 33 und/oder die zweite Welle 34 aus einer Flexwelle gebildet sind, wodurch die jeweilige Welle durch elastische Verformungen Toleranzen ausgleichen kann und darüber hinaus kann die Übertragung von Schwingungen reduziert werden.

Die ersten Getriebeeinheiten 31 der zwei Antriebsstränge 24 sowie die Antriebseinrichtung 22 sind auf einer dem Innenraumboden 10 zugewandten Seite des Sitzes 5 auf der Passagierraumseite 12 des Innenraumbodens angeordnet, wobei die ersten Getriebeeinheiten 31 quer zur Längsachse X bevorzugt in gegenüberliegenden Endbereichen des Sitzes 5 angeordnet sein können.

Die zweiten Getriebeeinheiten 32 sind auf der Unterseite 11 des Innenraumbodens 10 angeordnet bzw. zumindest in der Durchbrechung 15 derart angeordnet, dass die zweiten Getriebeeinheiten 32 in Richtung des Passagierraums nicht aus der Durchbrechung 15 herausragen. Dementsprechend ragt die zweite Welle 34 des jeweiligen Antriebsstrangs 24 in die Durchbrechung 24, um die erste Getriebeeinheit 31 mit der zweiten Getriebeeinheit 32 zu verbinden.

Die jeweilige erste Getriebeeinheit 31 und die jeweilige zweite Getriebeeinheit 32 können jeweils ein Schneckengetriebe mit einer Schnecke 37 und einem Schneckenrad 38 umfassen, wobei bevorzugt die erste Getriebeeinheit 31 und die zweite Getriebeeinheit 32 im Wesentlichen baugleich ausgebildet sind.

Die erste Welle 33 und die zweite Welle 34 sind in einem Winkel α und versetzt zueinander angeordnet, wobei der Winkel α in dem dargestellten Ausführungsbeispiel ca. 90° beträgt und somit die zweite Welle 34 senkrecht zu einer Ebene des Innenraumbodens 10 verläuft.

Die ersten Wellen 33 der beiden Antriebsstränge 24 können eine gemeinsame erste Welle 33 bilden, wodurch die beiden Antriebsstränge 24 durch eine gemeinsame Welle 33 von der Antriebseinrichtung 22 angetrieben werden.

Die Schiene 40 ist auf der Unterseite 11 des Innenraumbodens 10 angeordnet und von dem Passagierraum durch die Durchbrechung 15 zugänglich. Die Schiene 40 umfasst in dem dargestellten Ausführungsbeispiel eine Spindel 42, die gemäß der Figur 1 in der Ebene des Innenraumbodens versetzt zu der Durchbrechung 15 angeordnet sein kann. Die Spindel 42 ist parallel zu der Längsachse X angeordnet.

Weiterhin kann Figur 2 entnommen werden, dass die Sitzanordnung 2 ein Tragteil 45 umfasst. Das Tragteil 45 kann den Sitz 5 an der Schiene 40 abstützen und die Sitzlängsverstelleinheit 2, insbesondere die Antriebsstränge 24, sowie die Antriebseinrichtung 22 aufnehmen. Das Tragteil 45 kann einen nicht dargestellten Schlitten umfassen, der auf der Schiene 40 in der Längsachse X, vorzugsweise formschlüssig, geführt wird.

Das Tragteil 45 kann nach Art eines U-förmigen Tragbügels ausgebildet sein und kann ferner einen ersten Teilabschnitt 46 und einen zweiten Teilabschnitt 47 aufweisen. Der erste Teilabschnitt 46 nimmt vorzugsweise die Antriebseinrichtung 22 sowie die jeweilige erste Getriebeeinheit 31 der zwei Antriebsstränge 24 auf, währenddessen der zweite Teilabschnitt 47 die zweite Getriebeeinheit 32 aufnimmt.

Der zweite Teilabschnitt 47 ist derart ausgestaltet, dass er nicht den Innenraumboden 10 auf der Passagierraumseite 12 überragt, sondern dass der zweite Teilabschnitt 47 entweder auf die Unterseite 11 vollständig angeordnet ist oder in die Durchbrechung 15 ragt, ohne diese zu durchragen. Bevorzugt ist der zweite Teilabschnitt 47 in der Durchbrechung zurückspringend angeordnet.

Die zweite Getriebeeinheit 32 ist auf der Unterseite 11 des Innenraumbodens 10 angeordnet und kann mit dem ersten Teilabschnitt 46 durch in Figur 2 angedeutete Verbindungsmittel 48 lösbar verbunden werden.

Die zweite Welle 34 kann einen ersten Wellenabschnitt und einen zweiten Wellenabschnitt aufweisen, wobei der erste Wellenabschnitt und der zweite Wellenabschnitt durch das Verbindungsmittel 34 lösbar verbunden werden können.

Die Sitzlängsverstelleinheit 2 kann zur Entnahme des Sitzes 5 aus dem Passagierraum 4 des Fahrzeuges geteilt werden, wobei die Verbindungsmittel 48 die Verbindung zwischen den Teilabschnitten 46, 47 des Tragteils 45 sowie zwischen den zwei Wellenabschnitten der zweiten Welle 34 trennt.

Die Schiene 40 ist auf der Unterseite 11 des Innenraumbodens 10 angeordnet und von dem Passagierraum durch die Durchbrechung 15 zugänglich. Die Schiene 40 umfasst in dem dargestellten Ausführungsbeispiel eine Spindel 42, die gemäß der Figur 1 in der Ebene des Innenraumbodens versetzt zu der Durchbrechung 15 angeordnet sein kann.

Die Spindel 42 ist trieblich mit der zweiten Getriebeeinheit 32 in bekannter Weise derart gekoppelt, dass bei einer Betätigung der Antriebseinrichtung 22 die durch den jeweiligen Antriebsstrang 24 übertragene Rotationsbewegung in eine laterale Bewegung in der Längsachse X gewandelt wird.

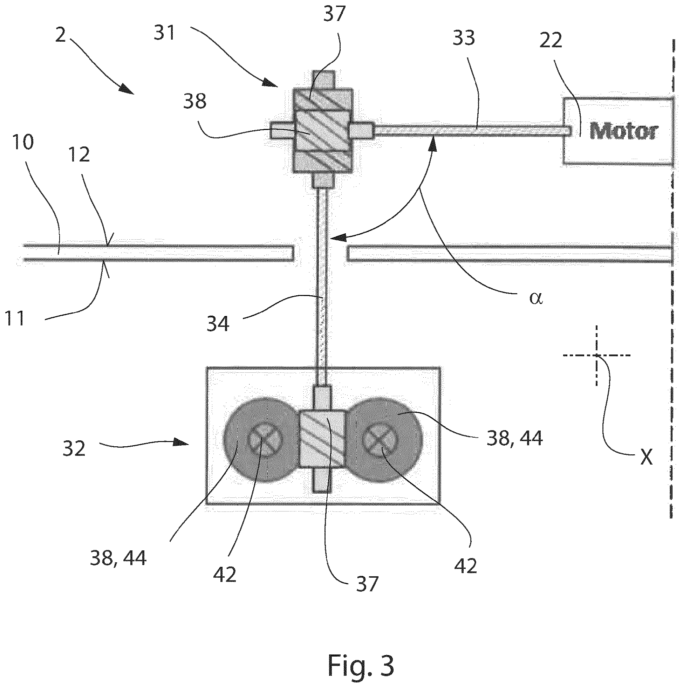

Figur 3 zeigt eine Weiterbildung des zuvor beschriebenen Ausführungsbeispiels gemäß den Figuren 1 und 2, wobei sich die beiden Ausführungen durch die Ausgestaltung der Schiene 40 unterscheiden. Wie aus Figur 3 ersichtlich ist, weist die jeweilige Schiene 40 zwei Spindeln 42 auf, wobei die Spindeln 42 in Bezug auf die Längsachse X beidseitig zu der jeweiligen zweiten Getriebeeinheit 32 angeordnet sind. Durch eine derartige Ausgestaltung der Schiene 40 können höhere Crashfestlichkeiten realisiert werden, ohne dass die Bauhöhe in dem begrenzten Bauraum unterhalb des Innenraumbodens 10 verändert wird. Die zwei Spindeln 42 der jeweiligen Schiene sind gegenläufig ausgebildet und weisen jeweils eine Spindelmutter 44 auf, wobei beide Spindelmuttern 44 mit einer Komponente des zweiten Getriebeteils 32 unmittelbar in Wirkkontakt stehen.

### Bezugszeichenliste

- 1: Sitzanordnung
- 2: Sitzlängsverstelleinheit
- 4: Passagierraum
- 5: Sitz
- 6: Sitzfläche
- 10: Innenraumboden
- 11: Unterseite
- 12: Passagierraumseite
- 15: Durchbrechung
- 22: Antriebseinrichtung
- 24: Antriebsstrang
- 31: erste Getriebeeinheit
- 32: zweite Getriebeeinheit
- 33: erste Welle
- 34: zweite Welle
- 37: Schnecke
- 38: Schneckenrad
- 40: Schiene
- 42: Spindel
- 44: Spindelmutter
- 45: Tragteil
- 46: erster Teilabschnitt
- 47: zweiter Teilabschnitt
- 48: Verbindungsmittel

- X: Längsachse
- α: Winkel

## Patentansprüche

1. Sitzlängsverstelleinheit (2), aufweisend
- eine Antriebseinrichtung (22),
- zwei Schienen (40) mit jeweils mindestens einer Spindel (42), die parallel zu einer Längsachse (X) und zueinander beabstandet angeordnet sind, und
- zwei von der Antriebseinrichtung (22) antreibbare Antriebsstränge (24),
- wobei jeder der Antriebsstränge (24) jeweils eine erste Getriebeeinheit (31) und eine zweite Getriebeeinheit (32) aufweist, und die zweite Getriebeeinheit (32) über die erste Getriebeeinheit (31) mit der Antriebseinrichtung (22) koppelt ist,
- wobei die zweite Getriebeeinheit (32) des jeweiligen Vortriebstrangs (24) zum Erzeugen eines Vortriebs in der Längsachse (X) mit einer der Schienen (40) gekoppelt ist,
**dadurch gekennzeichnet, dass** die erste Getriebeeinheit (31) mit der Antriebseinrichtung (22) über eine erste Welle (33) und die zweite Getriebeeinheit (32) mit der ersten Getriebeeinheit (31) über eine zweite Welle (34) verbunden ist..

2. Sitzlängsverstelleinheit (2) nach Anspruch 1, **dadurch gekennzeichnet, dass** die erste Getriebeeinheit (31) und/oder die zweite Getriebeeinheit (32) ein Schneckengetriebe umfassen bzw. umfasst.

3. Sitzlängsverstelleinheit (2) nach Anspruch 1 oder 2, **dadurch gekennzeichnet, dass** die erste Getriebeeinheit (31) und die zweite Getriebeeinheit (32) das gleiche Übersetzungsverhältnis und die gleiche Verzahnung aufweisen.

4. Sitzlängsverstelleinheit (2) nach einem der vorgenannten Ansprüche,
**dadurch gekennzeichnet, dass** die erste Welle (33) zu der zweiten Welle (34) in einem Winkel (α) und versetzt angeordnet ist und dass die erste Welle (33) und die zweite Welle (34) quer zu der Längsachse (X) angeordnet sind.

5. Sitzlängsverstelleinheit (2) nach Anspruch 4,
**dadurch gekennzeichnet, dass** der Winkel (α) 90°±15° beträgt.

6. Sitzlängsverstelleinheit (2) nach einem der vorgenannten Ansprüche,
**dadurch gekennzeichnet, dass** die erste Welle (33) der zwei Antriebsstränge (24) einstückig ist.

7. Sitzlängsverstelleinheit (2) nach einem der vorgenannten Ansprüche,
**dadurch gekennzeichnet, dass** die Antriebseinrichtung (22) zwischen den zwei Antriebssträngen (24) angeordnet ist.

8. Sitzlängsverstelleinheit (2) nach einem der vorgenannten Ansprüche,
**dadurch gekennzeichnet, dass** die erste Welle (33) und/oder die zweite Welle (34) eine Flexwelle sind bzw. ist.

9. Sitzlängsverstelleinheit (2) nach einem der vorgenannten Ansprüche,
**dadurch gekennzeichnet, dass** die zweite Getriebeeinheit (32) jeweils über eine Spindelmutter (44) mit der Spindel (42) gekoppelt ist

10. Sitzlängsverstelleinheit (2) nach einem der vorgenannten Ansprüche,
**dadurch gekennzeichnet, dass** die erste Getriebeeinheit (31) und die zweite Getriebeeinheit (32) mindestens eines Vortriebstrangs (24) in einem Tragteil (45) angeordnet sind.

11. Sitzlängsverstelleinheit (2) nach Anspruch 10,
**dadurch gekennzeichnet, dass** das Tragteil (45) mindestens einen ersten Teilabschnitt (46) und einen zweiten Teilabschnitt (47) aufweist, wobei in dem ersten Teilabschnitt (46) die erste Getriebeeinheit (31) und in dem zweiten Teilabschnitt (47) die zweite Getriebeeinheit (32) angeordnet ist.

12. Sitzlängsverstelleinheit (2) nach einem der vorgenannten Ansprüche,
**dadurch ge**k**ennzeichnet,** dass ein erster Teilabschnitt (46) und ein zweiter Teilabschnitt (47) über Verbindungsmittel (48) lösbar koppelbar sind.

13. Sitzlängsverstelleinheit (2) nach einem der vorgenannten Ansprüche,
**dadurch gekennzeichnet, dass** die zweite Welle (34) zweiteilig ist und dass die Verbindungsmittel (48) die zwei Wellenabschnitte koppeln können.

14. Sitzlängsverstelleinheit nach einem der vorgenannten Ansprüche,
**dadurch gekennzeichnet, dass** die jeweilige Schiene (40) zwei Spindeln (42) umfasst.

15. Sitzlängsverstelleinheit nach Anspruch 15,
**dadurch gekennzeichnet, dass** die zwei Spindeln (42) beidseitig der jeweiligen zweiten Getriebeeinheit (32) angeordnet sind und dass die Spindeln (42) gegenläufig sind.

16. Sitzanordnung (1), insbesondere eine Sitzanordnung (1) für ein Kraftfahrzeug, aufweisend
- einen Innenraumboden (10) mit einer Passagierraumseite (12) und einer Unterseite (11), und
- eine Sitzlängsverstelleinheit (2) nach einem der vorgenannten Ansprüche,
- wobei der Innenraumboden (10) in der Längsachse (X) mindestens zwei parallele und beabstandete Durchbrechungen (15) aufweist, die die Passagierraumseite (12) und die Unterseite (11) verbinden, und
- wobei auf der Unterseite (11) die Schienen (40) und die zweiten Getriebeeinheiten (32) angeordnet sind, und
- wobei auf der Passagierraumseite (12) die ersten Getriebeeinheiten (31) und die Antriebseinrichtung (22) angeordnet sind.

17. Sitzanordnung (1) nach Anspruch 17,
**dadurch gekennzeichnet, dass** das Tragteil (45) die Durchbrechungen (15) durchragt.

18. Sitzanordnung (1) nach einem der vorgenannten Ansprüche **dadurch gekennzeichnet, dass** der erste Teilabschnitt (46) von der Passagierraumseite (12) in die jeweilige Durchbrechung (15) ragt.

19. Kraftfahrzeug mit einer Sitzlängsverstelleinheit (2) nach einem der Ansprüche 1 bis 15 oder einer Sitzanordnung (1) nach einem der Ansprüche 16 bis 18.

## Claims

1. Seat longitudinal adjustment unit (2), comprising
- a drive mechanism (22),
- two tracks (40), each of which having at least one spindle (42), which are arranged parallel to a longitudinal axis (X) and at a distance to each other, and
- two drive trains (24), which can be driven by the drive mechanism (22),
- wherein each of the drive trains (24) comprises a first transmission unit (31) and a second transmission unit (32), and the second transmission unit (32) is coupled to the drive mechanism (22) by means of the first transmission unit (31),
- wherein the second transmission unit (32) of each respective drive train (24) is coupled to one of the tracks (40) in order to produce a forward motion along the longitudinal axis (X),
**characterized in that**
the first transmission unit (31) is connected to the drive mechanism (22) by means of a first shaft (33) and the second transmission unit (32) is connected to the first transmission unit (32) by means of a second shaft (34).

2. Seat longitudinal adjustment unit (2) in accordance with claim 1,
**characterized in that**
the first transmission unit (31) and/or the second transmission unit (32) include or includes a worm gear.

3. Seat longitudinal adjustment unit (2) in accordance with claim 1 or 2,
**characterized in that**
the first transmission unit (31) and the second transmission unit (32) comprise the same transmission ratio and the same toothing.

4. Seat longitudinal adjustment unit (2) in accordance with any of the preceding claims, **characterized in that**
the first shaft (33) is arranged at an angle (α) and offset to the second shaft (34) and **in that** the first shaft (33) and the second shaft (34) are arranged perpendicular to the longitudinal axis (X).

5. Seat longitudinal adjustment unit (2) in accordance with claim 4,
**characterized in that**
the angle (α) is 90° ± 15°.

6. Seat longitudinal adjustment unit (2) in accordance with any of the preceding claims, **characterized in that**
the first shaft (33) of the two drive trains (24) is a single piece.

7. Seat longitudinal adjustment unit (2) in accordance with any of the preceding claims, **characterized in that**
the drive mechanism (22) is arranged between the two drive trains (24).

8. Seat longitudinal adjustment unit (2) in accordance with any of the preceding claims, **characterized in that**
the first shaft (33) and/or the second shaft (34) is or are a flex shaft.

9. Seat longitudinal adjustment unit (2) in accordance with any of the preceding claims, **characterized in that** the second transmission unit (32) is each coupled to the spindle (42) by means of a spindle nut (44).

10. Seat longitudinal adjustment unit (2) in accordance with any of the preceding claims, **characterized in that**
the first transmission unit (31) and the second transmission unit (32) of at least one drive train (24) is arranged in a support element (45).

11. Seat longitudinal adjustment unit (2) in accordance with claim 11,
**characterized in that**
the support element (45) comprises at least one subsection (46) and a second subsection (47), wherein the first transmission unit (31) is arranged in the first subsection (46) and the second transmission unit (32) is arranged in the second subsection (47).

12. Seat longitudinal adjustment unit (2) in accordance with any of the preceding claims, **characterized in that**
a first subsection (46) and a second subsection (47) can be detachably coupled via connection means (48).

13. Seat longitudinal adjustment unit (2) in accordance with any of the preceding claims, **characterized in that**
the second shaft (34) is in two sections and **in that** the connection means (48) can couple the two shaft sections.

14. Seat longitudinal adjustment unit (2) in accordance with any of the preceding claims, **characterized in that**
each track (40) comprises two spindles (42).

15. Seat longitudinal adjustment unit (2) in accordance with claim 14,
**characterized in that**
the two spindles (42) are arranged on both sides of each transmission unit (32) and **in that** the spindles (42) are counter rotating.

16. Seating arrangement (1), in particular a seating arrangement (1) for a motor vehicle, comprising
- an interior compartment floor (10), having a passenger compartment side (12) and an underside (11), and
- a seat longitudinal adjustment unit (2) in accordance with any of the preceding claims
- wherein the interior compartment floor (10) comprises, in the longitudinal axis (X), at least two parallel and distant to each other openings (15) which connect the passenger compartment side (12) and the underside (11), and
- wherein the tracks (40) and the two transmission units (32) are arranged on the underside (11), and
- the first transmission units (31) and the drive mechanism (22) are arranged on the passenger compartment side (12).

17. Seating arrangement (1) in accordance with claim 16,
**characterized in that**
the support element (45) extends through the openings (15).

18. Seating arrangement (1) in accordance with any of the preceding claims, **characterized in that**
the first subsection (46) extends from the passenger compartment side (12) into the respective opening (15).

19. Motor vehicle having a seat longitudinal adjustment unit (2) in accordance with any of claims 1 to 15 or a seating arrangement (1) in accordance with any of claims 16 to 18.

## Revendications

1. Unité de réglage longitudinal de siège (2) comprenant :
- une installation d'entrainement (22),
- deux rails (40) ayant respectivement au moins une broche (42) et parallèles à l'axe longitudinal (X) en étant écartés l'un de l'autre et,
- deux lignes d'entrainement (24), entrainées par l'installation d'entrainement (22),
* chacune des lignes d'entrainement (24) a respectivement une première unité de transmission (31) et une seconde unité de transmission (32), la seconde unité de transmission (32) étant couplée par la première unité de transmission (31) à l'installation d'entrainement (22),
* la seconde unité de transmission (32) de la ligne d'entrainement avant (24) respective pour générer un entrainement vers l'avant selon l'axe longitudinal (X) est couplée avec l'un des rails (40) unité **caractérisée en ce que**
- la première unité de transmission (31) est reliée à l'installation d'entrainement (22) par un premier arbre (33) et la seconde unité de transmission (32) est reliée à la première unité de transmission (31) par un second arbre (34).

2. Unité de réglage longitudinal de siège (2) selon la revendication 1, **caractérisée en ce que**
la première unité de transmission (31) et/ou la seconde unité de transmission (32) ont une transmission à vis.

3. Unité de réglage longitudinal de siège (2) selon la revendication 1 ou 2,
**caractérisée en ce que**
la première unité de transmission (31) et la seconde unité de transmission (32) ont le même rapport de démultiplication et la même denture.

4. Unité de réglage longitudinal de siège (2) selon l'une des revendications précédentes,
**caractérisée en ce que**
le premier arbre (33) fait un angle (α) par rapport au second arbre (34) en étant décalé et,
le premier arbre (33) et le second arbre (34) sont transversaux à l'axe longitudinal (X).

5. Unité de réglage longitudinal de siège (2) selon la revendication 4, **caractérisée en ce que**
l'angle (α) est de 90° ± 15°.

6. Unité de réglage longitudinal de siège (2) selon l'une des revendications précédentes,
**caractérisée en ce que**
le premier arbre (33) des deux lignes d'entrainement (24) est en une seule pièce.

7. Unité de réglage longitudinal de siège (2) selon l'une des revendications précédentes,
**caractérisée en ce que**
l'installation d'entrainement (22) est entre les deux lignes d'entrainement (24).

8. Unité de réglage longitudinal de siège (2) selon l'une des revendications précédentes,
**caractérisée en ce que**
le premier arbre (33) et/ou le second arbre (34) sont des arbres flexibles.

9. Unité de réglage longitudinal de siège (2) selon l'une des revendications précédentes,
**caractérisée en ce que**
la seconde unité de transmission (32) est couplée à la broche (42) chaque fois par un écrou de broche (44).

10. Unité de réglage longitudinal de siège (2) selon l'une des revendications précédentes,
**caractérisée en ce que**
la première unité de transmission (31) et la seconde unité de transmission (32) d'au moins une ligne d'entrainement avant (24) sont dans une pièce de support (45).

11. Unité de réglage longitudinal de siège (2) selon la revendication 10, **caractérisée en ce que**
la pièce de support (45) a au moins un premier segment partiel (46) et un second segment partiel (47),
* la première unité de transmission (31) étant dans le premier segment partiel (46) et la seconde unité de transmission (32) étant dans le second segment partiel (47).

12. Unité de réglage longitudinal de siège (2) selon l'une des revendications précédentes,
**caractérisée en ce que**
le premier segment partiel (46) et le second segment partiel (47) sont couplés de manière amovible par des moyens de liaison (48).

13. Unité de réglage longitudinal de siège (2) selon l'une des revendications précédentes,
**caractérisée en ce que**
le second arbre (34) est en deux parties et les moyens de liaison (48) peuvent coupler les deux segments d'arbre.

14. Unité de réglage longitudinal de siège (2) selon l'une des revendications précédentes,
**caractérisée en ce que**
le rail respectif (40) comprend deux broches (42).

15. Unité de réglage longitudinal de siège (2) selon la revendication 14, **caractérisée en ce que**
les deux broches (42) sont de part et d'autre de la seconde unité de transmission (32) respective et les broches (42) sont en sens opposé.

16. Dispositif de siège (1), notamment dispositif de siège (1) de véhicule automobile comprenant :
- un fond de cabine (10) avec un côté passager (12) et un dessous (11), et
- une unité de réglage longitudinal de siège (2), selon l'une des revendications précédentes,
- le plancher (10) ayant dans l'axe longitudinal (X) au moins deux passages (15) parallèles et écartés reliant le côté passager (12) et le dessous (11) et,
- les rails (40) et les secondes unités de transmission (32) sont sur le dessous (11) et,
- le côté passager (12) porte les premières unités de transmission (31) et installation d'entrainement (22).

17. Dispositif de siège (1) selon la revendication 16,
**caractérisé en ce que**
la pièce de support (45) traverse les passages (15).

18. Dispositif de siège (1) selon l'une des revendications précédentes, **caractérisé en ce que**
le premier segment partiel (46) vient du côté passager (12) dans le passage respectif (15).

19. Véhicule automobile équipé d'une unité de réglage longitudinal de siège (2) selon l'une des revendications 1 à 15 ou d'un dispositif de siège (1) selon l'une des revendications 16 à 18.
